# EUROPEAN PATENT SPECIFICATION

(11) **EP 1 168 351 B1**
(45) Date of publication and mention of the grant of the patent: **13.10.2010**
(21) Application number: 01202473.3
(22) Date of filing: 27.06.2001
(51) Int. Cl.: G11B 33/04

(54) **Container for a data carrier as well as a storage system therefor**
Behälter für Datenträger und Speichersystem
Enveloppe pour support de données et système de stockage

(30) Priority: 27.06.2000 NL 1015540
(43) Date of publication of application: 02.01.2002
(73) Proprietor: Hanegraaf, André Adrianus Henricus, 5427 VK Boekel (NL)
(72) Inventor: Hanegraaf, André Adrianus Henricus, 5427 VK Boekel (NL)
(74) Representative: Van kan, Johan Joseph Hubert

(56) References cited:
- EP-A- 0 658 901
- CH-A- 676 699
- DE-A- 19 510 701
- GB-A- 2 324 784
- US-A- 4 850 731
- US-A- 5 263 581
- US-A- 5 396 987
- US-A- 5 462 160
- US-A- 5 882 748
- US-A- 5 938 019

## Description

The present invention relates to a container for a data carrier, in particular a compact disc, consisting of at least one first flexible plastic film, an intermediate flexible plastic film, and a second flexible plastic film, which films each have an upper edge, a lower edge and a first and a second side edge, and which are interconnected via said lower edges and said first and said second side edges, using an adhesive agent, so as to form a unitary flexible container. The present invention furthermore relates to a storage system for data carrier containers.

From European patent application no. 0 658 901 there is known a container for a data carrier as referred to in the introduction. The container that is known therefrom can be considered to be a container consisting of two insertion pockets, wherein one insertion pocket is intended to accommodate the CD-booklet and the other insertion pocket is intended to accommodate the CD itself, which insertion pockets are located one above the other. The insertion pocket for the CD is made up of a tab which covers only a partial region of the insertion pocket for the CD-booklet, in particular a length corresponding to maximally half the diameter of the CD. One drawback of such a container is the fact that the CD's that are thus stored will easily fall out of the container, so that they are liable to damage. In addition, in such a container the text booklet of the CD is not enveloped by the entire insertion pocket, so that damage may occur in this case as well.

A CD sleeve consisting of three plastic layers, which CD sleeve forms separate compartments for the CD itself and for the associated music booklet, is also known from US patent no. 4,850,731. From said US patent specification it is apparent that the CD itself is inserted into a first compartment, whilst a music booklet is inserted into a second compartment. In addition to that, such a CD sleeve comprises a slightly extended rear side, which extended rear side functions as a sort of flap. Said flap is subsequently laid over the two compartments, as a result of which a closed CD sleeve is obtained. In practice it has become apparent, however, that a CD sleeve comprising such a flap has a short life, because the flap exhibits tears after some time. Another drawback is the fact that the flap does not properly abut against the first compartment, so that there is a risk of the flap being folded double upon storage of such CD sleeves. In addition to that, such a CD sleeve requires a highly advanced packaging machine in order to prevent the flap from causing the machine to get jammed.

The container for a data carrier as referred to in the introduction is known per se from US patent no. 5,396,987. The container for compact discs that is known therefrom can be considered as an assembly of three polypropylene layers that have been welded together, as a result of which two separate compartments are obtained. Said main compartments function to store the CD itself as well as the associated music booklet. In addition, the middle polypropylene layer is provided with an additional compartment at the upper edge, along the entire length thereof, in which compartment data relating to the artist and the like can be stored. The dimension of said additional compartment is so small, however, that it is practically impossible to insert a strip of paper therein without damaging it. In addition to that, the front polypropylene film has a U-shaped recess, which enables easy insertion and removal of the compact disc. One drawback, however, is the fact that the presence of said U-shaped recess makes the compact disc susceptible to being damaged from outside, for example by sharp-edged objects, so that it is necessary to handle such a container with great care.

CD sleeves built up of flexible plastic layers are furthermore known from US patents nos. 4,687,101 and 5,595,798 and from US design patent no. 411.402.

The containers for data carriers, in particular compact discs, that are currently being marketed are well-known; they consist of a transparent, rigid and relatively thick plastic container, also called jewel box. Such containers comprise a music booklet, which also functions as the visible front side of the CD container, and an insert, which functions as the visible rear side of such a container. Said insert also contains the artist information that can be read from the side of such a CD box. Such CD boxes are stacked or stored one beside another, so that the information can be read from the insert via the narrow back of said boxes. The data carrier as such is relatively thin and relatively stiff. The degree of protection provided by such a CD box exceeds the degree of protection that is required under most circumstances. Such CD boxes take up an unnecessarily large amount of space, however, so that the number of CD's that can be carried along or be stored in a storage system in practice is severely limited.

Accordingly, it is an object of the present invention to provide a container for a data carrier, which container provides a significant saving of space in comparison with the CD boxes that are known from the prior art.

Another object of the present invention is to provide a container for a data carrier, which container can be stored in a simple manner and which directly provides the user with the required information with regard to the data carrier that is stored in such a container.

Another object of the present invention is to provide a container for a data carrier, in particular a compact disc, which container enables durable storage of a compact disc, whereby the risk of damage being caused to the data carrier and to the associated music booklet / insert is reduced to a minimum.

Another object of the present invention is to provide a storage system for such data carrier containers, which storage system makes it possible to store a larger number of such containers in comparison with the containers that are known from the prior art.

Another object of the present invention is to provide a data carrier container which can be handled by a packaging machine at a high production speed.

According to the present invention, the container as referred to in the introduction is characterized by the characterizing portion of claim 1.

Since the dimensions of the first and the second side edge of the first film are significantly smaller than those of the intermediate film and the second film, the insert that is generally also supplied in a standard CD box can be stored in the space enclosed by the intermediate film and the second film without being damaged and/or folded. In addition, the artist information can be read directly, so that the desired CD can directly be found in a collection of a large number of containers.

Furthermore the dimensions of the first and the second side edge of the first film, in combination with the dimension of the lower edge thereof, are such that it is possible to store a standard data carrier in the space that is enclosed by the first film and the intermediate film.

The dimensions of the lower edge thereof, are such so that it is possible to store an information booklet of a data carrier in the space that is enclosed by the first film and the intermediate film.

The dimensions of the first and the second side edge of the intermediate film and the second film, in combination with the dimensions of the lower edges thereof, are such that it is possible to store the insert of a data carrier in the space that is enclosed by the intermediate film and the second film.

According to the present invention a third flexible plastic film is disposed between said first film and said intermediate film, wherein the dimensions of the first and the second side edge of the third film are substantially identical to those of the first film.

As a result of the provision of a third flexible plastic film, an additional compartment is obtained, in which a second data carrier can be placed, for example. Such an embodiment is in particular desirable when a so-called double CD is used. In addition, the space created by the provision of the third flexible plastic film can be utilized for storing an additional music booklet.

According to an example which is not part of the invention, a third flexible plastic film is disposed between the first film and the intermediate film, wherein the dimensions of the first and the second side edge of the third film are larger than those of the first film and smaller than those of the intermediate film and the second film.

According to an example - which is not part of the invention, a third flexible plastic film is disposed between the first film and the intermediate film, wherein the dimensions of the first and the second side edge of the third film are substantially identical to those of the intermediate film.

Furthermore, in a specific embodiment, a fourth flexible plastic film is preferably disposed on said first film, wherein said fourth film is connected to the first film via the lower edge and the first and the second side edge of the fourth film, using an adhesive agent.

In particular, the dimensions of the first and the second side edge of the fourth film, in combination with the dimensions of the lower edge thereof, are selected so that said dimensions are significantly smaller than the dimensions of the first and the second side edge and the lower edge of the first film.

In accordance with such a construction, the fourth flexible plastic film, which is thus disposed on the first film, forms an additional compartment having significantly smaller dimensions than the other compartments.

In an especially preferred embodiment, it is possible to store a minidisc-type data carrier in the space enclosed by the fourth film and the first film.

With a view to storing a number of data carriers, for example in the case of a double CD, it is preferable to regard the unitary, flexible container as at least two interconnected containers according to the present invention, which have common first and second side edges. Thus the present container can be regarded as a container which can be folded open, wherein a data carrier and/or an information booklet can be placed both into the left-hand side and into the right-hand side, wherein at least one of said sides comprises a container according to the present invention.

In order to prevent the data carrier and/or the music booklet from getting out of the container undesirably, a flap is preferably present at the upper edge, which flap extends substantially along the entire length of the upper edge, with the first and the second side edge of said flap extending slightly over said first film.

Furthermore, each first side edge of the first film, the intermediate film, the second film and possibly the fourth film and/or the third film is preferably provided with one or more recesses that make the container suitable for storage in a storage system. Such recesses can be formed by means of a perforator, for example, so that the containers can be stored in a ring binder system.

The present invention furthermore relates to a storage system for data carrier containers, which storage system is according to the present invention characterized in that it comprises suspension means, into which the present container can be placed.

In a special embodiment of a storage system for data carrier containers according to the present invention, the storage system is preferably provided with cuts into which the present containers can be placed. A suitable storage system is, for example, a case or a CD rack.

The present invention furthermore relates to a storage system for data carrier containers, which storage system is characterized in that said storage system comprises an insertion element consisting of two foils which are interconnected at their side edges and at their lower edges, into which insertion element the container according to claims 1 - 7 can be inserted via the opening that is present at the upper edge thereof. In a further preferred embodiment, the insertion element includes means on one side edge thereof which enable storage in a ring binder construction. In an especially preferred embodiment, the insertion element is provided with an adhesive layer on the outer side of the foil, so that the insertion element can be affixed to the inside of a filing folder, for example, in a simple manner; in the case of actual use only the present data carrier is removed from the insertion element, whereby the data carrier is still protected against being damaged from outside.

The present invention will now be explained in more detail with reference to a number of drawings, which drawings illustrate special embodiments of the present invention, which should not be regarded as limitative, however.

Figure 1 shows a data carrier container.

Figure 2 shows a data carrier container according to the present invention.

Figure 3 shows a special embodiment of the data carrier container of Figure 1.

Figure 4 shows a special embodiment of a data carrier container according to the present invention.

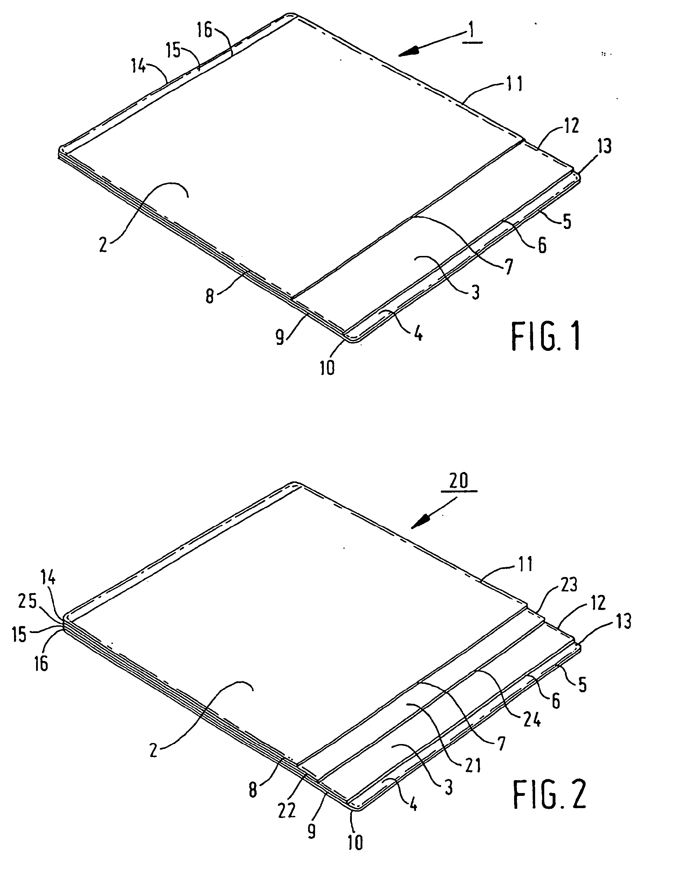

Figure 1 schematically shows the data carrier container, which is indicated by numeral 1. It should be noted that those parts in Figures 1 - 4 that correspond to each other are indicated by the same numerals. Container 1 comprises a first flexible plastic film 2, an intermediate flexible plastic film 3 and a second flexible plastic film 4. First flexible plastic film 2 comprises a first side edge 8, a second side edge 11, an upper edge 7 and a lower edge 14. Intermediate flexible plastic film 3 comprises a first side edge 9, a second side edge 12, a lower edge 15 and an upper edge 6. Second flexible plastic film 4 finally comprises a first side edge 10, a second side edge 13, a lower edge 16 and an upper edge 5. First flexible plastic film 2, intermediate flexible plastic film 3 and second flexible plastic film 4 are interconnected, using an adhesive agent, via lower edges 14, 15, 16, first side edges 8, 9, 10 and second side edges 11, 12, 13 so as to form the unitary flexible container 1. The dimensions of first side edges 9, 10 and second side edges 12, 13 of both the intermediate film 3 and the second film 4 are substantially identical, wherein the dimensions of the first side edge 8 and the second side edge 11 of the first film 2 are significantly smaller than those of intermediate film 3 and second film 4. Thus a construction is obtained wherein the data carrier (not shown), in particular a compact disc, can be placed in the space enclosed by first film 2 and intermediate film 3. Furthermore, also the information booklet (not shown) can be placed in said space. Finally, the insert associated with the data carrier can be placed into the space enclosed by intermediate film 3 and second film 4 without being damaged. It should be understood, of course, that in certain embodiments it is desirable to be able to store the music booklet in the space enclosed by intermediate film 3 and second film 4 as well. In addition to that it is possible to store more than one data carrier in the space enclosed by first film 2 and intermediate film 3.

Figure 2 schematically shows a special embodiment of the unitary, flexible container 20, which container 20 is significantly different from container 1 in that an additional compartment is obtained by providing a third flexible plastic film 21. An additional compartment is suitable, for example, for storing a data carrier, a music booklet and/or an insert therein. Third film 21 is disposed between first flexible plastic film 2 and intermediate flexible plastic film 3. In the embodiment that is shown in Figure 2, the dimensions of the first side edge 22 and the second side edge 23 of the third film 21 have been selected to substantially correspond to those of first film 2. In another example (not shown), the dimensions of the first side edge 22 and the second side edge 23 of the third film 21 are larger than those of first film 2 and smaller than or substantially identical to those of intermediate film 3 and second film 4, respectively. Third flexible plastic film 21 furthermore comprises an upper edge 24, a lower edge 25, a first side edge 22 and a second side edge 23, wherein the unitary, flexible container 20 has been obtained by interconnecting lower edges 14, 15, 16, 25, first side edges 8, 9, 10, 22 and second side edges 11, 12, 13, 23, using an adhesive agent.

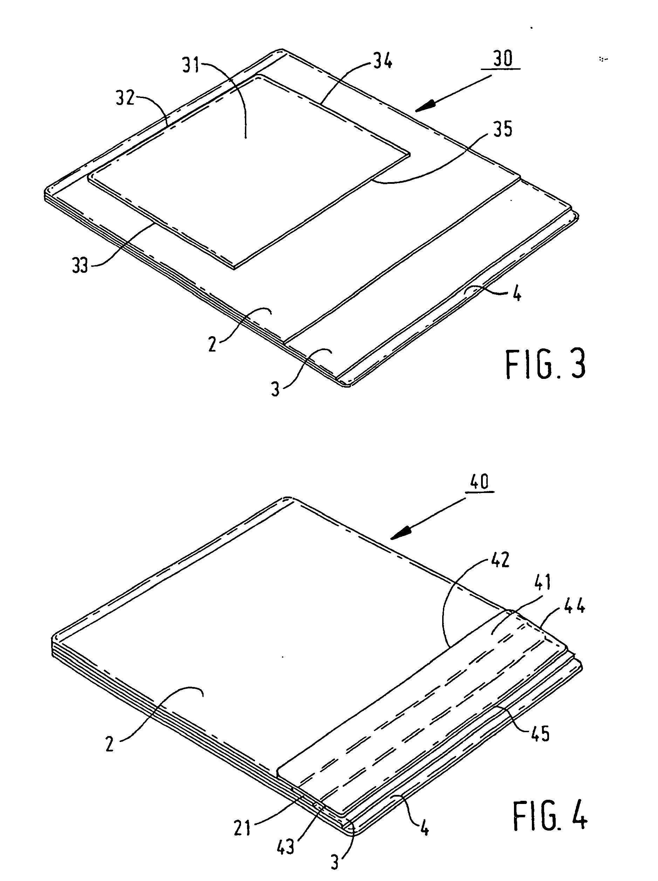

Figure 3 schematically shows a unitary, flexible container 30 wherein a fourth flexible plastic film 31 is disposed on first film 2, wherein fourth film 31 is connected to first film 2 via the lower edge 32 and the first side edge 33 and the second side edge 34 of the fourth film 31, using an adhesive agent. Since the upper edge 35 of fourth flexible plastic film 31 is not connected to first film 2, an additional compartment is obtained, in which a data carrier, in particular a minidisc-type data carrier, can be stored.

Finally, Figure 4 schematically shows a unitary, flexible container 40, which container 40 comprises a flap 41 which extends substantially along the entire length of the upper edge. Said flap 41 comprises a first side edge 43, a second side edge 44, a lower edge 42 and an upper edge 45, which upper edge 45 is connected to the upper edge of intermediate film 3 by using an adhesive agent. It should be understood, however, that such a flap 41 is also suitable for use in the flexible container 1 of Figure 1, wherein such a flap 41 extends substantially along the entire length of the upper edge 6 of intermediate film 3, for example.

The present invention should especially be considered as relating to a data carrier container comprising at least three plastic films, wherein in particular the dimensions of the first and the second side edges of the intermediate film and the second film are substantially identical, and wherein the dimensions of the first and the second side edge of the first film are significantly smaller than those of the intermediate film and the second film.

According to such an embodiment, the insert of an existing data carrier can be stored in the space enclosed by the intermediate film and the second film without being damaged, wherein, moreover, the data carrier itself can easily be removed from the space enclosed by the first film and the intermediate film. Although the special embodiments are shown to comprise a container which is built up of three plastic films, see Figure 1, it is also possible to incorporate additional films, see Figures 2, 3 and 4, whereby it should be noted that the number of films is by no means limited to a specific number.

## Claims

1. A container (1, 20, 30. 40) for a data carrier, in particular a compact disc, consisting of at least a first flexible plastic film (2), an intermediate flexible plastic film ( 3), and a second flexible plastic film (4), which films each have an upper edge (5, 6, 7) , a lower edge (14, 15, 16) and a first (8, 9, 10) and a second (11, 12, 13) side edge, and which are interconnected via said lower edges and said first and said second side edges, using an adhesive agent, so as to form a unitary flexible container, the dimensions of the first (8) and the second (11) side edge of the first film (2), in combination with the dimension of the lower edge (14) thereof, are selected so that it is possible to store both a standard data carrier and an information booklet of said data carrier in the space that is enclosed by the first film (2) and the intermediate film (3), wherein the dimensions of the first (9, 10) and the second (12, 13) side edges of the intermediate film (3) and the second film (4), in combination with the dimensions of the lower edges (15, 16) thereof, are substantial identical for storing an insert of said data carrier in the space that is enclosed by the intermediate film (3) and the second film (4), wherein the dimensions of the first (8) and the second (11) side edge of the first film (2) are significantly smaller than those of the intermediate film (3) and the second film (4),
**characterized in that** a third flexible plastic film (21) comprising an upper edge (24), a lower edge (25), a first (22) and second (23) side edge is interconnected between said first film (2) and said intermediate film (3) by said lower edge and said first and said second side edge, wherein the dimensions of the first (22) and the second (23) side edge of the third film (21) are substantially identical to those of the first film (2).

2. A container according to claims 1 **characterized in that** a fourth flexible plastic film (31) is disposed on said first film (2), wherein said fourth film (31) is connected to the first film (2) via the lower edge (32) and the first (33) and the second (34) side edge of the fourth film, using an adhesive agent.

3. A container according to claim 2, **characterized in that** the dimensions of the first (33) and the second (34) side edge of the fourth film (31), in combination with the dimensions of the lower edge (32) thereof, are selected so that said dimensions are significantly smaller than the dimensions of the first (8) and the second (9) side edge and the lower edge (14) of the first film (2).

4. A container according to claims 2 - 3, **characterized in that** it is possible to store a minidisc-type data carrier in the space enclosed by the fourth film (31) and the first film (2).

5. A container according to claims 1 - 4, **characterized in that** the unitary, flexible container can be regarded as at least two interconnected containers (1, 20, 30, 40), which containers (1, 20, 30, 40) have common first and second side edges.

6. A container according to claims 1 - 5, **characterized in that** a flap (41) is present at the upper edge, which flap (41) extends substantially along the entire length of the upper edge, with the first (43) and the second (44) side edge of said flap (41) extending slightly over said first film (2).

7. A container according to claims 1 - 6, **characterized in that** each first side edge (8, 9, 10, 22) of the first film (2), the intermediate film (3), the second film (4) and possibly the third film, (21) is provided with one or more recesses that make the container suitable for storage in a storage system.

8. A storage system for data carrier containers, provided with suspensions means comprising at least one container according to any or more of claims 1-7.

9. A storage system for data carrier containers, provided with cuts comprising at least one container according to any or more of claims 1-7.

10. A storage system for data carrier containers, provided with an insertion element consisting of two foils which are interconnected at their side edges and at their lower edges, comprising at least one container according to any or more of claims 1-7.

11. A storage system according to claim 10, **characterized in that** said insertion element includes means on one side edge thereof which enable storage in a ring binder construction.

12. A storage system according to claim 10, **characterized in that** said insertion element is provided with an adhesive layer on the outer side of the foil.

## Patentansprüche

1. Behälter (1, 20, 30, 40) für einen Datenträger, insbesondere eine Compact Disc, der aus wenigstens einer ersten flexiblen Kunststofffolie (2), einer flexiblen Kunststoff-Zwischenfolie (3) und einer zweiten flexiblen Kunststofffolie (4) besteht, wobei die Folien jeweils einen oberen Rand (5, 6, 7), einen unteren Rand (14, 15, 16) sowie einen ersten (8, 9, 10) und einen zweiten (11, 12, 13) Seitenrand aufweisen und unter Verwendung eines Klebstoffs über die unteren Ränder und die ersten und die zweiten Seitenränder unter Bildung eines einheitlichen flexiblen Behälters miteinander verbunden sind, wobei die Abmessungen des ersten (8) und des zweiten (11) Seitenrandes der ersten Folie (2) in Kombination mit der Abmessung ihres unteren Randes (14) so gewählt sind, dass sowohl ein Standard-Datenträger als auch ein Informationsheft des Datenträgers in dem Raum untergebracht werden kann, der von der ersten Folie (2) und der Zwischenfolie (3) umschlossen ist, wobei die Abmessungen des ersten (9, 10) und des zweiten (12, 13) Seitenrandes der Zwischenfolie (3) bzw. der zweiten Folie (4) in Kombination mit den Abmessungen ihrer unteren Ränder (15 bzw. 16) im wesentlichen identisch sind, um einen Einsatz des Datenträgers in dem Raum unterzubringen, der von der Zwischenfolie (3) und der zweiten Folie (4) umschlossen ist, wobei die Abmessungen des ersten (8) und des zweiten (11) Seitenrandes der ersten Folie (2) bedeutend kleiner als diejenigen der Zwischenfolie (3) und der zweiten Folie (4) sind, **dadurch gekennzeichnet, dass** eine dritte flexible Kunststofffolie (21), die einen oberen Rand (24), einen unteren Rand (25) sowie einen ersten (22) und einen zweiten (23) Seitenrand aufweist, über den unteren Rand und den ersten und den zweiten Seitenrand zwischen der ersten Folie (2) und der Zwischenfolie (3) mit diesen verbunden ist, wobei die Abmessungen des ersten (22) und des zweiten (23) Seitenrandes der dritten Folie (21) im wesentlichen denjenigen der ersten Folie (2) entsprechen.

2. Behälter nach Anspruch 1, **dadurch gekennzeichnet, dass** auf der ersten Folie (2) eine vierte flexible Kunststofffolie (31) angeordnet ist, wobei die vierte Folie (31) über den unteren Rand (32) und den ersten (33) und den zweiten (34) Seitenrand der vierten Folie unter Verwendung eines Klebstoffs mit der ersten Folie (2) verbunden ist.

3. Behälter nach Anspruch 2, **dadurch gekennzeichnet, dass** die Abmessungen des ersten (33) und des zweiten (34) Seitenrandes der vierten Folie (31) in Kombination mit den Abmessungen ihres unteren Randes (32) so gewählt sind, dass die Abmessungen bedeutend kleiner als die Abmessungen des ersten (8) und des zweiten (9) Seitenrandes und des unteren Randes (14) der ersten Folie (2) sind.

4. Behälter nach den Ansprüchen 2 bis 3, **dadurch gekennzeichnet, dass** in dem von der vierten Folie (31) und der ersten Folie (2) umschlossenen Raum ein Datenträger in der Art einer MiniDisc untergebracht werden kann.

5. Behälter nach den Ansprüchen 1 bis 4, **dadurch gekennzeichnet, dass** der einheitliche, flexible Behälter als wenigstens zwei miteinander verbundene Behälter (1, 20, 30, 40) angesehen werden kann, wobei die Behälter (1, 20, 30, 40) gemeinsame erste und zweite Seitenränder haben.

6. Behälter nach den Ansprüchen 1 bis 5, **dadurch gekennzeichnet, dass** am oberen Rand eine Klappe (41) vorhanden ist, wobei sich die Klappe (41) im wesentlichen entlang der gesamten Länge des oberen Randes erstreckt, wobei sich der erste (43) und der zweite (44) Seitenrand der Klappe (41) geringfügig über die erste Folie (2) erstrecken.

7. Behälter nach den Ansprüchen 1 bis 6, **dadurch gekennzeichnet, dass** der jeweils erste Seitenrand (8, 9, 10, 22) der ersten Folie (2), der Zwischenfolie (3), der zweiten Folie (4) und möglicherweise der dritten Folie (21) mit einer oder mehreren Ausnehmungen versehen ist, durch die sich der Behälter zur Aufbewahrung in einem Aufbewahrungssystem eignet.

8. Aufbewahrungssystem für Datenträgerbehälter, versehen mit Aufhängungsmitteln mit wenigstens einem Behälter nach einem oder mehreren der Ansprüche 1 bis 7.

9. Aufbewahrungssystem für Datenträgerbehälter, versehen mit Einschnitten mit wenigstens einem Behälter nach einem oder mehreren der Ansprüche 1 bis 7.

10. Aufbewahrungssystem für Datenträgerbehälter, versehen mit einem Einführelement, das aus zwei Folien besteht, die an ihren Seitenrändern und an ihren unteren Rändern miteinander verbunden sind, mit wenigstens einem Behälter nach einem oder mehreren der Ansprüche 1 bis 7.

11. Aufbewahrungssystem nach Anspruch 10, **dadurch gekennzeichnet, dass** das Einführelement an einem Seitenrand Mittel aufweist, die die Aufbewahrung in einer Ringbuchausführung ermöglichen.

12. Aufbewahrungssystem nach Anspruch 10, **dadurch gekennzeichnet, dass** das Einführelement auf der Außenseite der Folie mit einer Klebeschicht versehen ist.

## Revendications

1. Enveloppe (1, 20, 30, 40) pour un support de données, en particulier un disque compact, composée d'au moins un premier film plastique flexible (2), un film plastique flexible intermédiaire (3) et un deuxième film plastique flexible (4), lesquels films ont chacun un bord supérieur (5, 6, 7), un bord inférieur (14, 15, 16) et un premier (8, 9, 10) et un deuxième (11, 12, 13) bord latéral et lesquels sont interconnectés via lesdits bords inférieurs et lesdits premier et deuxième bords latéraux, en utilisant un agent adhésif, de manière à former une enveloppe flexible unitaire, les dimensions du premier (8) et du deuxième (11) bord latéral du premier film (2), en combinaison avec la dimension de son bord inférieur (14), sont sélectionnées de manière qu'il soit possible de stocker à la fois un support de données standard et un livret d'informations dudit support de données dans l'espace qui est fermé par le premier film (2) et le film intermédiaire (3), dans laquelle les dimensions des premiers (9, 10) et des deuxièmes (12, 13) bords latéraux du film intermédiaire (3) et du deuxième film (4), en combinaison avec les dimensions de leurs bords inférieurs (15, 16), sont sensiblement identiques pour stocker un insert dudit support de données dans l'espace qui est fermé par le film intermédiaire (3) et le deuxième film (4), dans laquelle les dimensions du premier (8) et du deuxième (11) bord latéral du premier film (2) sont considérablement inférieures à celles du film intermédiaire (3) et du deuxième film (4),
**caractérisée en ce qu'**un troisième film plastique flexible (21), comprenant un bord supérieur (24), un bord inférieur (25), un premier (22) et un deuxième (23) bord latéral, est interconnecté entre ledit premier film (2) et ledit film intermédiaire (3) par ledit bord inférieur et lesdits premier et deuxième bords latéraux, dans laquelle les dimensions du premier (22) et du deuxième (23) bord latéral du troisième film (21) sont sensiblement identiques à celles du premier film (2).

2. Enveloppe selon la revendication 1, **caractérisée en ce qu'**un quatrième film plastique flexible (31) est disposé sur ledit premier film (2), dans laquelle ledit quatrième film (31) est connecté au premier film (2) via le bord inférieur (32) et le premier (33) et le deuxième (34) bord latéral du quatrième film, en utilisant un agent adhésif.

3. Enveloppe selon la revendication 2, **caractérisée en ce que** les dimensions du premier (33) et du deuxième (34) bord latéral du quatrième film (31), en combinaison avec les dimensions de son bord inférieur (32), sont sélectionnés de manière que lesdites dimensions soient considérablement inférieures à celles du premier (8) et du deuxième (9) bord latéral et du bord inférieur (14) du premier film (2).

4. Enveloppe selon les revendications 2 à 3, **caractérisée en ce qu'**il est possible de stocker un support de données de type minidisque dans l'espace fermé par le quatrième film (31) et le premier film (2).

5. Enveloppe selon les revendications 1 à 4, **caractérisée en ce que** l'enveloppe flexible unitaire peut être considérée comme au moins deux enveloppes interconnectées (1, 20, 30, 40), lesquelles enveloppes (1, 20, 30, 40) ont des premiers et deuxièmes bords latéraux communs.

6. Enveloppe selon les revendications 1 à 5, **caractérisée en ce qu'**un rabat (41) est présent au niveau du bord supérieur, lequel rabat (41) s'étend sensiblement le long de toute la longueur du bord supérieur, avec le premier (43) et le deuxième (44) bord latéral dudit rabat (41) s'étendant légèrement par-dessus ledit premier film (2).

7. Enveloppe selon les revendications 1 à 6, **caractérisée en ce que** chaque premier bord latéral (8, 9, 10, 22) du premier film (2), du film intermédiaire (3), du deuxième film (4) et éventuellement du troisième film (21) est pourvu d'un ou plusieurs évidements qui rendent l'enveloppe adaptée pour le stockage dans un système de stockage.

8. Système de stockage pour enveloppes de support de données, muni de moyens de suspension, comprenant au moins une enveloppe selon l'une quelconque ou plusieurs des revendications 1 à 7.

9. Système de stockage pour enveloppes de support de données, muni de découpes, comprenant au moins une enveloppe selon l'une quelconque ou plusieurs des revendications 1 à 7.

10. Système de stockage pour enveloppes de support de données, muni d'un élément d'insertion composé de deux feuilles qui sont interconnectées au niveau de leurs bords latéraux et au niveau de leurs bords inférieurs, comprenant au moins une enveloppe selon l'une quelconque ou plusieurs des revendications 1 à 7.

11. Système de stockage selon la revendication 10, **caractérisé en ce que** ledit élément d'insertion comprend des moyens sur un bord latéral de ceux-ci, qui permettent le stockage dans une construction de reliure à anneaux.

12. Système de stockage selon la revendication 10, **caractérisé en ce que** ledit élément d'insertion est pourvu d'une couche adhésive sur le côté externe de la feuille.
